(19) Europäisches Patentamt
European Patent Office
Office européen des brevets

(11) **EP 4 722 297 A1**

(12) **EUROPEAN PATENT APPLICATION**
published in accordance with Art. 153(4) EPC

(43) Date of publication:
**08.04.2026 Bulletin 2026/15**

(21) Application number: **24815594.7**

(22) Date of filing: **31.05.2024**

(51) International Patent Classification (IPC):
**C08L 67/04** $^{(2006.01)}$  **C08G 63/16** $^{(2006.01)}$
**C08K 5/15** $^{(2006.01)}$  **C08L 67/02** $^{(2006.01)}$

(52) Cooperative Patent Classification (CPC):
**C08G 63/16; C08K 5/15; C08L 67/02; C08L 67/04**

(86) International application number:
**PCT/JP2024/019966**

(87) International publication number:
**WO 2024/248114 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.06.2023 JP 2023091549**

(71) Applicant: **Kuraray Co., Ltd.
Kurashiki-shi, Okayama 710-0801 (JP)**

(72) Inventors:
• **ISHIO Muneki
Tsukuba-shi, Ibaraki 305-0841 (JP)**
• **YAHIRO Kensuke
Tsukuba-shi, Ibaraki 305-0841 (JP)**
• **KUBO Sayaka
Tsukuba-shi, Ibaraki 305-0841 (JP)**

(74) Representative: **D Young & Co LLP
3 Noble Street
London EC2V 7BQ (GB)**

(54) **RESIN COMPOSITION**

(57) A resin composition containing a polyester polyol (A) and a polylactic acid-based polymer (B), in which the polyester polyol (A) contains a unit derived from a polyhydric alcohol (a1) and a polycarboxylic acid (a2), and the polyhydric alcohol (a1) contains an aliphatic diol (a1-1) having an alkyl group as a branched chain and having 4 or more carbon atoms.

EP 4 722 297 A1

**Description**

Technical Field

The present invention relates to a resin composition.

Background Art

From the viewpoint of environmental protection, bioplastics have been actively developed. Polylactic acid-based polymers which are bioplastics and raw materials of which are plant-derived renewable resources such as corn produced through photosynthesis are expected to be used in a wide range of fields.

However, it is known that polylactic acid-based polymers are brittle and inferior in flexibility (elongation), impact resistance, and the like to petroleum-based plastics. Therefore, there is a case where the use of the polylactic acid-based polymer as a resin material is limited. As an attempt to alleviate the defect of the polylactic acid-based polymer, for example, a technique of using a polyester polyol having a specific hydroxyl value has been studied (for example, PTL 1). In addition, a technique of using two or more plasticizers selected from the group consisting of an ester of a polybasic acid and a monohydric alcohol, an ester of a monobasic acid and a polyhydric alcohol, and an ester of a polybasic acid and a polyhydric alcohol has been studied (for example, see PTL 2).

Citation List

Patent Literature

PTL 1: JP2008-019419A
PTL 2: JP2005-023091A

Summary of Invention

Technical Problem

Although the impact resistance and elongation of the resin composition containing a polylactic acid-based polymer are improved to some extent by the techniques described in PTL 1 and PTL 2, they are not sufficiently satisfactory. In addition, when an additive such as a plasticizer is added to the resin composition containing a polylactic acid-based polymer in order to impart good impact resistance and elongation, there is a problem that the glass transition temperature of the resin composition can be drastically reduced.

Therefore, an object of the present invention is to provide a resin composition in which a decrease in the glass transition temperature is suppressed and which has good elongation and impact resistance.

Solution to Problem

As a result of intensive studies to solve the above problem, the present inventors arrived at the present invention described below and found that the problem can be solved.

That is, the present invention is as follows.

[1] A resin composition containing a polyester polyol (A) and a polylactic acid-based polymer (B),

in which the polyester polyol (A) contains a unit derived from a polyhydric alcohol (a1) and a polycarboxylic acid (a2), and
the polyhydric alcohol (a1) contains an aliphatic diol (a1-1) having an alkyl group as a branched chain and having 4 or more carbon atoms.

[2] The resin composition according to [1], in which the polycarboxylic acid (a2) is an aliphatic dicarboxylic acid (a2-1).
[3] The resin composition according to [2], in which the aliphatic dicarboxylic acid (a2-1) is at least one selected from adipic acid and sebacic acid.
[4] The resin composition according to any of [1] to [3], in which the polyester polyol (A) has a number average molecular weight of 500 to 100,000.

[5] The resin composition according to any of [1] to [4], in which 0.1 to 50 parts by mass of the polyester polyol (A) is contained with respect to 100 parts by mass of the polylactic acid-based polymer (B).

[6] The resin composition according to [3], in which the aliphatic dicarboxylic acid (a2-1) contains adipic acid and the polyester polyol (A) has a number average molecular weight of 2,000 to 100,000.

[7] The resin composition according to [3], in which the aliphatic dicarboxylic acid (a2-1) contains sebacic acid and the polyester polyol (A) has a number average molecular weight of 2,000 to 100,000.

[8] The resin composition according to any of [1] to [7], in which 0.001 to 3.0 parts by mass of a cyclic ester compound (C) is contained with respect to 100 parts by mass of the polylactic acid-based polymer (B).

Advantageous Effects of Invention

According to the present invention, it is possible to provide a resin composition in which a decrease in the glass transition temperature is suppressed and which has good elongation and impact resistance.

Description of Embodiments

Hereinafter, description is made based on an example of an embodiment of the present invention. However, the embodiments shown below are examples for embodying the technical idea of the present invention, and the present invention is not limited to the following description.

In the present specification, a preferable embodiments is shown, and a combination of two or more of the individual preferable embodiments is also a preferable embodiment. When there are several numerical value ranges for an item indicated by a numerical value range, the lower limit value and the upper limit value thereof can be selectively combined to form a preferable embodiment. Further, when a numerical value range of "XX to YY" is described, it means "XX or more and YY or less".

In the present specification, "... unit" (here, "..." indicates a polymer) means "a structural unit derived from ...". For example, a "polylactic acid unit" means a "structural unit derived from polylactic acid", and a "polyester unit" means a "structural unit derived from polyester".

In the present specification, the "main chain" means the longest molecular chain in a molecule. In addition, the "branched chain" means a molecular chain other than the main chain in the molecule.

[Resin Composition]

The resin composition of the present embodiment contains a polyester polyol (A) and a polylactic acid-based polymer (B). Further, the polyester polyol (A) contains a unit derived from a polyhydric alcohol (a1) and a polycarboxylic acid (a2), and the polyhydric alcohol (a1) contains an aliphatic diol (a1-1) having an alkyl group as a branched chain and having 4 or more carbon atoms.

As a result of various studies, the present inventors have found that the resin composition containing a specific polyester polyol (A) and a polylactic acid-based polymer (B) suppresses a decrease in the glass transition temperature and has good elongation and impact resistance.

The reason why the resin composition of the present embodiment suppresses a decrease in the glass transition temperature and has good elongation and impact resistance is not clear, and various factors are combined, but it is presumed as follows.

Since the polyester polyol (A) contains an ester structure, it has appropriate compatibility with the polylactic acid-based polymer (B) similarly containing an ester structure. Accordingly, it is presumed that the resin composition of the present embodiment has good elongation and impact resistance.

In addition, in the case of a resin composition containing a general plasticizer and a polylactic acid-based polymer (B), since the compatibility between the plasticizer and the polylactic acid-based polymer (B) is very high, they are completely compatible with each other to cause a decrease in the glass transition temperature. On the other hand, in the present embodiment, it is presumed that the polyester polyol (A) and the polylactic acid-based polymer (B) have appropriate compatibility and form a phase separation structure, and thus a decrease in the glass transition temperature is suppressed.

<Polyester Polyol (A) >

The polyester polyol (A) contains a unit derived from a polyhydric alcohol (a1) and a polycarboxylic acid (a2), and the polyhydric alcohol (a1) contains an aliphatic diol (a1-1) having an alkyl group as a branched chain and having 4 or more carbon atoms.

<<Polyhydric alcohol (a1)>>

The polyhydric alcohol (a1) contains an aliphatic diol (a1-1) having an alkyl group as a branched chain and having 4 or more carbon atoms. Note that the "main chain" in the aliphatic diol (a1-1) is the longest molecular chain in the molecule, and hydroxy groups are bonded to both ends thereof. In addition, the "branched chain" in the aliphatic diol (a1-1) refers to a partial structure branched from the "main chain" in the aliphatic diol (a1-1), and a hydroxy group is not bonded to the terminal thereof. In addition, the "number of carbon atoms" is the number of carbon atoms of the entire aliphatic diol (a1-1) including the number of carbon atoms constituting the alkyl group.

When the polyhydric alcohol (a1) contains the aliphatic diol (a1-1) having an alkyl group as a branched chain and having 4 or more carbon atoms, the polyester polyol (A) becomes flexible, and the resin composition exhibits excellent elongation and impact resistance.

In the aliphatic diol (a1-1), the number of branched chains is preferably 1 or 2, and more preferably 1. Further, the branched chain is preferably a methyl group, an ethyl group, and a propyl group, more preferably a methyl group and an ethyl group, and further more preferably a methyl group. Further, when the aliphatic diol (a1-1) has a plurality of branched chains, the respective branched chains can be the same or different.

The aliphatic diol (a1-1) preferably has hydroxy groups at both ends of the main chain from the viewpoint of facilitating reaction with a dicarboxylic acid and ease of production, and from the viewpoint of achieving even better biodegradability.

From the viewpoint of biodegradability, the number of carbon atoms of the aliphatic diol (a1-1) is preferably 10 or less, and more preferably 9 or less. Further, from the viewpoint of elongation and impact resistance, the number of carbon atoms of the aliphatic diol (a1-1) is preferably 4 or more, and more preferably 6 or more. That is, the number of carbon atoms of the aliphatic diol (a1-1) is preferably 4 to 10, and more preferably 6 to 9.

Examples of the aliphatic diol (a1-1) include 1,2-butanediol, 1,3-butanediol, 2-methyl-1,3-propanediol, 2,2-dimethyl-1,3-propanediol, 2-ethyl-1,3-propanediol, 2-ethyl-2-methyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, and 2-methyl-1,8-octanediol. The aliphatic diol (a1-1) is preferably 2-methyl-1,3-propanediol, 3-methyl-1,5-pentanediol and 2,4-diethyl-1,5-pentanediol, and more preferably 3-methyl-1,5-pentanediol.

One kind of the aliphatic diol (a1-1) may be used alone, or two or more kinds thereof may be used in combination.

The total amount of the aliphatic diol (a1-1) in the polyhydric alcohol (a1) is preferably 90 mol% or more, more preferably 95 mol% or more, and further more preferably 99 mol% or more, and can be 100 mol%. That is, the polyhydric alcohol (a1) is preferably an aliphatic diol (a1-1).

The polyhydric alcohol (a1) may contain a polyhydric alcohol (a1-2) other than the aliphatic diol (a1-1).

Examples of the polyhydric alcohol (a1-2) other than the aliphatic diol (a1-1) include ethylene glycol, propylene glycol (1,2-propanediol), 1,4-butanediol, 1,5-pentanediol, 1,6-hexanediol, diethylene glycol, triethylene glycol, tetraethylene glycol, dipropylene glycol, tripropylene glycol, tetrapropylene glycol, dibutylene glycol, tributylene glycol, tetrabutylene glycol, and trimethylolpropane.

<<Polycarboxylic acid (a2)>>

The polycarboxylic acid (a2) is not limited as long as the effect of the present invention is not impaired.

Examples of the polycarboxylic acid (a2) include an aliphatic dicarboxylic acid (a2-1), an aromatic dicarboxylic acid (a2-2), and a cycloaliphatic dicarboxylic acid (a2-3). Among these, the aliphatic dicarboxylic acid (a2-1) is preferable from the viewpoint of biodegradability.

From the viewpoint of exhibiting good elongation and impact resistance, the number of carbon atoms of the polycarboxylic acid (a2) is preferably 4 or more, more preferably 5 or more, and further more preferably 6 or more, and from the viewpoint of exhibiting even more excellent biodegradability, it is preferably 12 or less, more preferably 10 or less, and further more preferably 8 or less. That is, the number of carbon atoms of the polycarboxylic acid (a2) is preferably 4 to 12, more preferably 5 to 10, further more preferably 6 to 10, and still further more preferably 6 to 8.

Examples of the aliphatic dicarboxylic acid (a2-1) include succinic acid, glutaric acid, adipic acid, pimelic acid, suberic acid, azelaic acid, sebacic acid, undecanedioic acid, decanedicarboxylic acid, dodecylsuccinic acid, dodecenylsuccinic acid, and octenylsuccinic acid. From the viewpoint of exhibiting good elongation and impact resistance, the aliphatic dicarboxylic acid (a2-1) is preferably at least one selected from adipic acid and sebacic acid.

One kind of the aliphatic dicarboxylic acid (a2-1) may be used alone, or two or more kinds thereof may be used in combination.

Examples of the aromatic dicarboxylic acid (a2-2) include phthalic acid, terephthalic acid, isophthalic acid, diphenic acid, 4,4'-biphenyldicarboxylic acid, diphenylmethane-4,4'-dicarboxylic acid, diphenylsulfone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid. From the viewpoint of exhibiting good elongation and impact resistance, the aromatic dicarboxylic acid (a2-2) is preferably at least one selected from terephthalic acid and isophthalic acid.

One kind of the aromatic dicarboxylic acid (a2-2) may be used alone or two or more kinds thereof may be used in combination.

Examples of the cycloaliphatic dicarboxylic acid (a2-3) include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, cyclodecanedicarboxylic acid, decahydro-1,4-naphthalenedicarboxylic acid, and 1,3-adamantanedicarboxylic acid.

One kind of the cycloaliphatic dicarboxylic acid (a2-3) may be used alone or two or more kinds thereof may be used in combination.

The polyester polyol (A) may contain a unit (a') other than the unit derived from the polyhydric alcohol (a1) and the polycarboxylic acid (a2) or it is not necessary to contain the unit (a').

The monomer constituting the unit (a') is not particularly limited as long as the effect of the present invention is not impaired.

The content ratio of the unit (a') in the polyester polyol (A) is preferably 50 mol% or less, more preferably 30 mol% or less, further more preferably 20 mol% or less, still further more preferably 15 mol% or less, and particularly preferably 10 mol% or less.

<<Number Average Molecular Weight of Polyester Polyol (A)>>

The number average molecular weight of the polyester polyol (A) is preferably 500 or more, more preferably 1,000 or more, further more preferably 2,000 or more, still further more preferably 3,000 or more, and still further more preferably 4,000 or more, from the viewpoint of elongation and impact resistance. From the viewpoint of molding processability and compatibility with the polylactic acid-based polymer (B), it is preferably 100,000 or less, more preferably 50,000 or less, and further more preferably 20,000 or less.

In one embodiment of the present invention, the number average molecular weight of the polyester polyol (A) is preferably 500 to 100,000, more preferably 1,000 to 100,000, further more preferably 2,000 to 50,000, and still further more preferably 4,000 to 20,000.

The number average molecular weight of the polyester polyol (A) can be determined by gel permeation chromatography (GPC) measurement in terms of standard polystyrene. In addition, when a commercially available product is used, a catalog value can be adopted.

In one embodiment of the present invention, preferably, the polycarboxylic acid (a2) is an aliphatic dicarboxylic acid (a2-1), the aliphatic dicarboxylic acid (a2-1) contains adipic acid and the number average molecular weight of the polyester polyol (A) is preferably 2,000 to 100,000, and more preferably 4,000 to 100,000.

In another embodiment of the present invention, it is preferable that the polycarboxylic acid (a2) is an aliphatic dicarboxylic acid (a2-1), the aliphatic dicarboxylic acid (a2-1) contains sebacic acid and the number average molecular weight of the polyester polyol (A) is 2,000 to 100,000.

<Polylactic Acid-Based Polymer (B)>

Examples of the polylactic acid-based polymer (B) used in the present embodiment include at least one selected from the group consisting of a homopolymer of L-lactic acid, a homopolymer of D-lactic acid, a copolymer of L-lactic acid and D-lactic acid, a homopolymer of DL-lactic acid, a copolymer of DL-lactic acid and L-lactic acid, a copolymer of DL-lactic acid and D-lactic acid, and a polymer of lactide which is a cyclic dimer of lactic acid.

Further, the polylactic acid-based polymer (B) may be a copolymer of lactic acid and an aliphatic hydroxycarboxylic acid other than lactic acid, an aliphatic dicarboxylic acid, an aliphatic diol, an aromatic dicarboxylic acid, or the like. The copolymer preferably contains the unit derived from lactic acid in an amount of 70 mol% or more, and more preferably 90 mol% or more.

Among these, as the polylactic acid-based polymer (B), a homopolymer of L-lactic acid, a homopolymer of D-lactic acid, or a copolymer of L-lactic acid and D-lactic acid is preferable, and a homopolymer of L-lactic acid is more preferable.

One kind of the polylactic acid-based polymer (B) can be used alone, or two or more kinds thereof can be used in combination.

A commercially available product can be used as the polylactic acid-based polymer (B). Examples of the commercially available product include "Ingeo" series (trade name) manufactured by NatureWorks, "Luminy" series (trade name) manufactured by TOTAL CORBION, "Revode" series manufactured by Zhejiang Hisun Biomaterials Co., Ltd., and "SUPLA" (trade name) manufactured by SUPLA Material Technology Co., Ltd.

The weight average molecular weight of the polylactic acid-based polymer (B) is preferably 50,000 or more, more preferably 100,000 or more, and further more preferably 150,000 or more, from the viewpoint of elongation and impact resistance. From the viewpoint of molding processability and compatibility with the polyester polyol (A), it is preferably 600,000 or less, more preferably 400,000 or less, and further more preferably 300,000 or less. That is, the weight average molecular weight of the polylactic acid-based polymer (B) is preferably 50,000 to 600,000, more preferably 100,000 to 400,000, and further more preferably 150,000 to 300,000.

The weight average molecular weight of the polylactic acid-based polymer (B) can be determined by gel permeation chromatography (GPC) measurement in terms of standard polystyrene. Further, when a commercially available product is used, a catalog value can be adopted.

<Cyclic Ester Compound (C)>

The resin composition of the present embodiment may further contain a cyclic ester compound (C). By containing the cyclic ester compound (C), a decrease in the glass transition temperature of the resin composition can be further suppressed.

The cyclic ester compound (C) is not particularly limited, and may be a cyclized product of a hydroxycarboxylic acid such as a cyclic ester between two molecules of an $\alpha$-hydroxycarboxylic acid, a $\gamma$-hydroxycarboxylic acid, a 3-hydroxycarboxylic acid, or the like, may be a condensed cyclized product of an alcohol and a carboxylic acid such as lactone, or may be a cyclic compound having another ester structure.

Examples of the $\alpha$-hydroxycarboxylic acid that forms the cyclic ester between two molecules include glycolic acid, L- and/or D-lactic acid, $\alpha$-hydroxybutyric acid, $\alpha$-hydroxyisobutyric acid, $\alpha$-hydroxyvaleric acid, $\alpha$-hydroxycaproic acid, $\alpha$-hydroxyisocaproic acid, $\alpha$-hydroxyheptanoic acid, $\alpha$-hydroxyoctanoic acid, $\alpha$-hydroxydecanoic acid, $\alpha$-hydroxymyristic acid, $\alpha$-hydroxystearic acid, and an alkyl-substituted derivative thereof.

Examples of the lactone include $\beta$-propiolactone, $\beta$-butyrolactone, pivalolactone, $\gamma$-butyrolactone, $\delta$-valerolactone, $\beta$-methyl-$\delta$-valerolactone, and $\epsilon$-caprolactone.

Examples of other cyclic compounds having an ester structure include dioxanone such as trimethylene carbonate. When the cyclic ester has an asymmetric carbon, it may be any of a D body, an L body, and a racemic body.

One of these cyclic esters can be used alone or two or more kinds can be used in combination.

The cyclic ester compound (C) preferably contains a unit derived from an aliphatic diol (c1) and an aliphatic dicarboxylic acid (c2), that is, it is preferably a cyclic ester compound obtained by reacting the aliphatic diol (c1) and the aliphatic dicarboxylic acid (c2), from the viewpoint of further suppressing a decrease in the glass transition temperature of the resin composition.

The aliphatic diol (c1) is not particularly limited, but examples thereof include those similar to the aliphatic diol (a1-1).

The aliphatic dicarboxylic acid (c2) is not particularly limited, but examples thereof include those similar to the aliphatic dicarboxylic acid (a2-1).

As the combination of the aliphatic diol (c1) and the aliphatic dicarboxylic acid (c2), a combination of 2-methyl-1,3-propanediol and succinic acid, a combination of 3-methyl-1,5-pentanediol and succinic acid, a combination of 2,4-diethyl-1,5-pentanediol and succinic acid, a combination of 2-methyl-1,3-propanediol and adipic acid, a combination of 3-methyl-1,5-pentanediol and adipic acid, a combination of 3-methyl-1,5-pentanediol and sebacic acid, and a combination of 2,4-diethyl-1,5-pentanediol and adipic acid are examples of preferable embodiments, a combination of 3-methyl-1,5-pentanediol and succinic acid, a combination of 2,4-diethyl-1,5-pentanediol and succinic acid, a combination of 3-methyl-1,5-pentanediol and adipic acid, a combination of 3-methyl-1,5-pentanediol and sebacic acid, and a combination of 2,4-diethyl-1,5-pentanediol and adipic acid are examples of more preferable embodiments, and a combination of 3-methyl-1,5-pentanediol and adipic acid and a combination of 3-methyl-1,5-pentanediol and sebacic acid are examples of further more preferable embodiments, from the viewpoint of further suppressing a decrease in the glass transition temperature of the resin composition.

The cyclic ester compound (C) containing a unit derived from an aliphatic diol (c1) and an aliphatic dicarboxylic acid (c2) is preferably a cyclic ester compound (4-methyl-1,7-dioxacyclotridecane-8,13-dione) obtained by reacting 3-methyl-1,5-pentanediol and adipic acid from the viewpoint of further suppressing a decrease in the glass transition temperature of the resin composition.

The method for producing the cyclic ester compound (C) is not particularly limited, and it can be produced by a known condensation reaction using a hydroxycarboxylic acid or an alcohol and a carboxylic acid as raw materials.

<Content Ratio>

The resin composition of the present embodiment contains the polyester polyol (A) in an amount of preferably 0.1 to 50 parts by mass, more preferably 1 to 40 parts by mass, further more preferably 3 to 15 parts by mass, and still further more preferably 3 to 10 parts by mass, with respect to 100 parts by mass of the polylactic acid-based polymer (B). When the content ratio is as described above, a resin composition having even more excellent elongation and impact resistance can be formed.

In addition, the total content ratio of the polyester polyol (A) and the polylactic acid-based polymer (B) in the resin composition of the present embodiment is preferably 80% by mass or more, more preferably 85% by mass or more, further more preferably 90% by mass or more, still further more preferably 95% by mass or more, and still further more preferably 98% by mass or more, and may be 100% by mass. When the content ratio is as described above, the effect of the present invention is more remarkably exhibited.

When the resin composition of the present embodiment further contains the cyclic ester compound (C) other than the polyester polyol (A) and the polylactic acid-based polymer (B), the cyclic ester compound (C) is contained in an amount of preferably 0.001 to 3.0 parts by mass, more preferably 0.005 to 2.5 parts by mass, further more preferably 0.01 to 2.0 parts by mass, and still further more preferably 0.01 to 1.5 parts by mass, with respect to 100 parts by mass of the polylactic acid-based polymer (B).

The resin composition of the present embodiment may contain at least one resin component selected from the group consisting of a biomass resin and a biodegradable resin, other than the polyester polyol (A), the polylactic acid-based polymer (B), and the cyclic ester compound (C).

Examples of such a biomass resin or biodegradable resin include polycaprolactone (PCL), polybutylene succinate (PBS), polybutylene succinate adipate (PBSA), polybutylene adipate terephthalate (PBAT), polyglycolic acid (PGA), polyethylene furanoate (PEF), polyhydroxyalkanoate (PHA) [for example, polyhydroxybutyrate (PHB), polyhydroxybutyrate valerate (PHBV), 3-hydroxybutyric acid-3-hydroxyhexanoic acid copolymerization polyester, and the like], cellulose acetate (CA), and starch polyester (Mater-Bi (registered trademark)).

<Glass Transition Temperature (Tg) of Resin Composition>

The glass transition temperature of the resin composition is preferably 40 °C or higher and 75°C or lower. Within the above numerical range, the resin composition tends to be excellent in elongation and impact resistance.

From the viewpoint of heat resistance, the glass transition temperature of the resin composition is more preferably 45°C or higher, further more preferably 50°C or higher, and still further more preferably 52°C or higher.

From the viewpoint of elongation and impact resistance, the glass transition temperature of the resin composition is more preferably 70°C or lower, and further more preferably 60°C or lower.

That is, the glass transition temperature of the resin composition is more preferably 45°C or higher and 70°C or lower, further more preferably 50°C or higher and 60°C or lower, and still further more preferably 52°C or higher and 60°C or lower.

The glass transition temperature of the resin composition can be determined by differential scanning calorimetry, and specifically, can be determined under the measurement conditions described in Examples below.

<Additive>

The resin composition of the present embodiment can contain an additive other than the polyester polyol (A) and the polylactic acid-based polymer (B).

Examples of the additive include an inorganic filler, a softening agent, a heat aging inhibitor, an antioxidant, a hydrolysis resistance inhibitor, a light stabilizer, an antistatic agent, a mold release agent, a flame retardant, a foaming agent, a pigment, a dye, a whitener, an ultraviolet absorber, a lubricant, and an impact resistance improver. These can be used alone or in combination of two or more thereof.

When the additive is used, the content of the additive in the resin composition can be appropriately determined according to the desired physical properties of the resin composition.

<Method for Producing Resin Composition>

The method for producing the resin composition of the present embodiment is not particularly limited, and the polyester polyol (A), the polylactic acid-based polymer (B), and as necessary, the cyclic ester compound (C) and the additive can be uniformly mixed.

Examples of the mixing method include a method of melt-kneading using a single-screw extruder, a multi-screw extruder, a Banbury mixer, a heating roll, a Brabender, or various kneaders, or a method of melt-kneading by supplying each component from a separate charging port.

Further, preblending may be performed before melt-kneading. Examples of the preblending method include a method using a mixer such as a Henschel mixer, a high speed mixer, a V blender, a ribbon blender, a tumbler blender, or a conical blender. The temperature at the time of melt-kneading can be arbitrarily selected preferably in the range of 140 to 250°C in consideration of the melting point and decomposition temperature of the polyester polyol (A).

[Molded Product]

In addition, the present invention also provides a molded product made of the resin composition.

The shape of the molded product may be a molded product that can be produced using the resin composition of the present embodiment. Examples of the molded product include molded products having various shapes such as a pellet, a film, a sheet, a plate, a pipe, a tube, a bottle, a fibrous body, a rod body, a particulate body, a granular body, and a foam body. The method for producing the molded product is not particularly limited, and it can be molded by various molding methods, for example, known methods such as injection-molding, blow-molding, press-molding, extrusion-molding, calender-molding, and molding by a 3D printer.

[Application]

When the polylactic acid-based polymer (B) is mixed with the polyester polyol (A) to form the resin composition, elongation and impact resistance can be improved while a decrease in glass transition temperature is suppressed. Accordingly, the present invention provides a modifier for a polylactic acid-based polymer (B) made of a polyester polyol (A).

Further, in a preferable embodiment, the polyester polyol (A) is used as a modifier for the polylactic acid-based polymer (B).

The resin composition of the present embodiment can be used for various applications.

Examples of the application of the resin composition include:

a Food utensil such as a food bag, a food cap, a food tray, a straw, cutlery, and a food container;

a stopper and a cap liner for a container for storing food, beverage, medicine, or the like;

a single layer or multilayer film and sheet for an electronic component packaging material, a pharmaceutical packaging material, a food packaging material, an agricultural material, a civil engineering and construction material, industrial materials, or the like;

a fiber such as fabric and nonwoven fabric;

an adhesive (imparting) agent and a tackiness (imparting) agent of a solvent type, a hot melt type, a heat stretching type, or the like;

a coating agent of an aqueous type, a solution type, an emulsion type, a dispersion type, or the like;

a filament for a 3D printer;

a developing toner;

a support material during hydraulic fracturing, and an agent for preventing water overflow during excavation;

various vibration-proof and vibration suppression members such as a vibration-proof rubber, a mat, a sheet, a cushion, a damper, a pad, and a mount rubber;

a member such as a housing in a home electric appliance including a television, a stereo, a vacuum cleaner, or a refrigerator, or a mobile phone;

an automobile interior and exterior part such as a bumper part, a body panel, a weather strip, a grommet, a skin such as an instrument panel, and an airbag cover;

various grips of scissors, a driver, a toothbrush, a ski pole, and the like;

a laminate layer of laminate paper for a daily good, a food container, an industrial material, an industrial good, or the like;

a foam body for an industrial material, an agricultural good, food, pharmaceutical, cosmetic, or the like; and

a coating material for a coated fertilizer and a coating material for a seed coat. Examples

Hereinafter, the present invention is specifically described with reference to Examples and Comparative Examples, but the present invention is not limited thereto.

[Measurement and Evaluation Method]

Various physical properties were measured or evaluated by the following method.

<Number Average Molecular Weight>

The polyester polyols obtained in Production Examples and Comparative Production Examples were used as samples, and the number average molecular weight (Mn) was determined as a molecular weight in terms of standard polystyrene by gel permeation chromatography (GPC). A specific measurement method is as follows.

(1) Case of Less than Mn 15,000

Tetrahydrofuran (THF) solution was used as an eluent, and 10 mg of the sample was weighed in terms of resin and dissolved in 1 mL of the above eluent. The solution was passed through a 0.2 $\mu$m-membrane filter to prepare a measurement sample. A specific measurement method is as follows.

(Measurement Conditions) Apparatus: HLC-EcoSEC8320GPC (manufactured by Tosoh Corporation)
Column: Three columns of KF-803, KF-802.5, and KF-802 (manufactured by Resonac Holdings Corporation) were connected in series.
Eluent: Tetrahydrofuran
Flow speed: 0.9 mL/minute
Sample injection amount: 30 $\mu$L
Column temperature: 40°C
Standard polystyrene: PSt Oligomer Kit (molecular weight of 589 to 98,900) manufactured by Tosoh Corporation was used, and approximation was performed by a cubic expression.
Detector: RI detector

(2) Case of Mn 15,000 or More

Tetrahydrofuran (THF) solution was used as the eluent. 1.0 mg of the sample was weighed in terms of resin and dissolved in 1 mL of the above eluent. The solution was passed through a 0.2 $\mu$m-membrane filter to prepare a measurement sample. The measurement conditions were as follows.

(Measurement Conditions)

Apparatus: HLC-8220GPC (manufactured by Tosoh Corporation)
Column: Two columns of TSK-gel SuperMultiporeHZ-M (manufactured by Tosoh Corporation) were connected in series.
Eluent: Tetrahydrofuran
Flow speed: 0.35 mL/minute
Sample injection amount: 10 $\mu$L
Column temperature: 40°C
Standard polystyrene: A polystyrene molecular weight standard (molecular weight: 580 to 1,214,000) manufactured by GL Sciences Inc. was used, and approximation was performed by a cubic equation.
Detector: RI detector

<Ratio (Molar Ratio) of Each Constituent Component of Polyester Polyol>

The polyester polyols obtained in Production Examples and Comparative Production Examples were used as samples, and the ratio (molar ratio) of each constituent component of the polyester polyol was determined by $^1$H-NMR measurement. The measurement conditions were as follows. The molar ratio was derived from the area ratio of each of the signals derived from each component in the obtained spectrum.

(Measurement Conditions)

Apparatus: 400YH (manufactured by JEOL Ltd.)
Solvent: Deuterated chloroform (CDCl$_3$)
Measurement temperature: 23°C

Accumulated number of times: 32 times

(Signal)

3-methyl-1,5-pentanediol: 4.0 to 4.2 ppm
2-methyl-1,3-propanediol: 3.9 to 4.1 ppm
1,4-butanediol: 4.0 to 4.2 ppm
Adipic acid: 2.2 to 2.4 ppm
Sebacic acid: 2.2 to 2.4 ppm
Terephthalic acid: 7.9 to 8.1 ppm
Isophthalic acid: 7.4 to 7.6 ppm
Succinic acid: 2.6 to 2.7 ppm

<Glass Transition Temperature (Tg) of Resin Composition>

The temperature of each of the resin compositions obtained in Examples and Comparative Examples was raised from 30 °C to 220°C at a rate of 10 °C/minute, held at 220°C for 5 minutes, and then reduced to -90°C at a rate of 10°C/minute using a differential scanning calorimeter ("DSC25" manufactured by TA Instrument) under a nitrogen flow rate (100 mL/minute). After holding at -90°C for 5 minutes, the temperature was raised to 220°C at 10°C/minute, and the midpoint glass transition temperature described in JIS K7121:2012 was taken as the glass transition temperature Tg.

<DuPont Impact Resistance Test>

(1) Preparation of Test Piece for DuPont Impact Resistance Test

Using a depressurized heat press apparatus ("IMC-183B" manufactured by Imoto Machinery Co., Ltd.), the pressure was reduced to -0.1 MPaG using an oil rotary pump, and after preheated at 200°C for 5 minutes, each of the resin compositions obtained in Examples and Comparative Examples was pressed at 8 MPa for 3 minutes. Thereafter, it was pressed at the 8 MPa for 3 minutes by a cold press apparatus equipped with a water flow cooler to prepare a pressed plate having a thickness of 0.4 mm. The obtained pressed plate was cut into a size of 50×50 mm and stored under an environment at 23°C and a humidity of 49% for 24 hours or more to prepare a test piece.

(2) DuPont Impact Resistance Test

Using a DuPont impact resistance tester (manufactured by Taiyu Kizai Kabushiki Kaisha, in accordance with JIS K 5600-5-3:1999), the 50% impact fracture energy (impact strength) (J) of the test piece after humidity conditioning was calculated in accordance with "7.6.2 Preliminary Test", "7.6.3 Test Procedure", and "7.6.4 Display of Results" of JIS K 7211-1:2006 under an environment of 23°C and a humidity of 49%, and the DuPont impact resistance was evaluated.

<Charpy Impact Resistance Test>

(1) Preparation of Test Piece for Charpy Impact Resistance Test

Each of the resin compositions obtained in Examples and Comparative Examples was injection-molded by an injection-molding apparatus ("SE100" manufactured by Sumitomo Heavy Industries, Ltd.) set at a cylinder temperature of 190 °C and a mold temperature of 35 °C to prepare a multipurpose test piece type A1 (a thickness of 4 mm, a full length of 170 mm, a parallel part length of 80 mm, and a parallel part width of 10 mm) described in JIS K 7139:2009. The obtained multipurpose test piece was cut to prepare a test piece for a Charpy impact resistance test (a thickness of 4 mm, a full length of 80 mm, and a width of 10 mm, with a notch).

(2) Charpy Impact Resistance Test

Using the test piece prepared by the above-described method, the impact strength was evaluated in accordance with JIS K 7111-1:2012 using an impact tester ("DG-CB" manufactured by Toyo Seiki Seisaku-sho, Ltd.) at 23°C and a humidity of 49% when measured at a hammer load of 2 J. As the measurement value, the average value of 10 times was adopted.

<Tensile Test (Press-Molding Test Piece)>

(1) Preparation of Test Piece for Tensile Test

Using a depressurized heat press apparatus ("IMC-183B" manufactured by Imoto Machinery Co., Ltd.), the pressure was reduced to -0.1 MPaG using an oil rotary pump, and after preheated at 200°C for 5 minutes, each of the resin compositions obtained in Examples and Comparative Examples was pressed at 8 MPa for 3 minutes. Thereafter, it was pressed at the 8 MPa for 3 minutes by a cold press apparatus equipped with a water flow cooler to prepare a pressed plate having a thickness of 0.4 mm. The obtained pressed plate was punched to produce a JIS-No. 3-dumbbell test piece (dumbbell-shaped No. 3 test piece) as a press-molded test piece.

(2) Tensile Test

A dumbbell test piece (dumbbell-shaped No. 3 test piece) as the obtained press-molded test piece was stored under conditions of 23°C and a humidity of 49% for 24 hours or more, and the tensile modulus of elasticity (MPa), the maximum strength (MPa), and the tensile elongation (breaking strain) (%) were measured when evaluated at a tensile rate of 5 mm/minute at 23°C and a humidity of 49% using a universal material tester ("INSTRON5900R-5666" manufactured by Instron). As the measurement value, the averaged value of 5 times was adopted.

<Bending Test and Tensile Test (Injection-Molding Test Piece)>

(1) Preparation of Test Piece for Tensile Test and Test Piece for Bending Test

Each of the resin compositions obtained in Examples and Comparative Examples was injection-molded by an injection-molding apparatus ("SE100" manufactured by Sumitomo Heavy Industries, Ltd.) set at a cylinder temperature of 190°C and a mold temperature of 35°C to prepare a multipurpose test piece type A1 (a thickness of 4 mm, a full length of 170 mm, a parallel part length of 80 mm, and a parallel part width of 10 mm) described in JIS K 7139:2009 as an injection-molded test piece. The obtained multipurpose test piece was cut out to prepare a cuboid test piece (a thickness of 4 mm, a length of 80 mm, and a width of 10 mm,) as an injection-molded test piece.

(2) Tensile Test

The obtained multipurpose test piece type A1 (a thickness of 4 mm) was stored under conditions of 23°C and a humidity of 49% for 24 hours or more, and the tensile modulus of elasticity (MPa), the maximum strength (MPa), and the tensile elongation (breaking strain) (%) were measured when evaluated at a tensile rate of 5 mm/minute at 23°C and a humidity of 49% using a universal material tester (Autograph "AG-2000B" manufactured by Shimadzu Corporation). As the measurement value, the averaged value of 5 times was adopted.

(3) Bending Test

The obtained cuboid test piece (a thickness of 4 mm, a length of 80 mm, and a width of 10 mm) was stored under conditions of 23°C and a humidity of 49% for 24 hours or more, and the bending modulus of elasticity (MPa), the maximum strength (MPa), and the bending strain (%) were measured when evaluated at a test rate of 2 mm/minute at 23°C and a humidity of 49% using a universal material tester (Autograph "AG-2000B" manufactured by Shimadzu Corporation). As the measurement value, the averaged value of 5 times was adopted.

<Bleed-out Test>

The dumbbell test piece (dumbbell-shaped No. 3 test piece) prepared in the "Preparation of Test Piece for Tensile Test" was stored at 80°C for 16 hours or more, and the surface state was evaluated visually and by touch.

VG: Apparent bleed-out or stickiness is not confirmed.

G: Slight bleed-out or stickiness is observed, but it is at a practically acceptable level.

NG: Noticeable bleed-out or stickiness is observed, and it is not suitable for practical use.

<Biodegradability (Compost) Test>

(1) Preparation of Test Piece

The pressed plate prepared for the impact resistance test was cut into a size of 10×10 mm to prepare a test piece. Using this test piece, biodegradability was evaluated by the following procedure in accordance with JIS K 6953-1:2011.

(2) Measurement of Total Amount of Total Amount of Organic Carbon and Theoretical Amount of Carbon Dioxide Generated

The total amount of organic carbon in each of the test piece and the control material (cellulose microcrystal manufactured by MERCK) was measured using an organic trace element analyzer ("Microcorder JM10 type" manufactured by J-Science Lab. Co., Ltd.), and the theoretical amount of carbon dioxide generated was calculated based on the result.

(3) Evaluation of Biodegradability

Ten g of each of the prepared test piece and control material, and 60 g of compost ("YK-12 Seed Source" manufactured by Yahata Bussan Kabushiki Kaisha) were added to a 500 mL-compost container and mixed, and allowed to stand at 58 $\pm$ 2°C for culturing. The amount of carbon dioxide generated during the culture period was measured using a $CO_2/H_2O$ gas analyzer "LI-850" (manufactured by LI-COR), and calculated by a non-dispersive-type infrared absorption method. Similarly, a blank test without using a test piece was also performed. The degree of biodegradation was calculated from the following equation.

$$\text{Degree of biodegradation} = \{(CO_2)_T - (CO_2)_B\} \,/\, ThCO_2 \times 100$$

$(CO_2)_T$: Total amount of cumulative carbon dioxide released from compost container during culture period
$(CO_2)_B$: Average cumulative amount of carbon dioxide released by blank test
$ThCO_2$: Theoretical total amount of carbon dioxide of the test piece in the test container (compost container)

A degree of biodegradation of 60% or more after 180 days was evaluated as pass ("A"), and less than 60 % was evaluated as fail ("B").

[Each Material]

Each material used in Examples and Comparative Examples is as follows.

(Polylactic Acid-Based Polymer (B))

Polylactic acid-based polymer (B-1): Ingeo Biopolymer 2003D (NatureWorks) (weight average molecular weight: 220,000)
Polylactic acid-based polymer (B-2): Ingeo Biopolymer 3001D (NatureWorks) (weight average molecular weight: 150,000)

(Plasticizer)

Plasticizer 1: DAIFATTY-101 (Daihachi Chemical Industry Co., Ltd.)

(Polyester Polyol (A))

[Production Example 1]

Into a flask equipped with an equipment capable of distilling off a generated liquid and a vacuum pump, 3-methyl-1,5-pentanediol and adipic acid were charged at a molar ratio of 3-methyl-1,5-pentanediol / adipic acid = 1.12 / 1, and heated under a nitrogen atmosphere at normal pressure at 160°C for 3 hours and then at 220°C for 3 hours to perform a reaction while distilling off water. Next, 150 $\mu$L of tetraisopropyl titanate was added, the pressure was reduced to 2,000 Pa, the reaction was performed for 3 hours, the pressure was further reduced to 80 Pa, and the reaction was performed while appropriately checking until the number average molecular weight reached 3,000, thereby obtaining a polyester polyol (A-1).

[Production Example 2]

A polyester polyol (A-2) was obtained in the same manner as in Production Example 1 except that the molar ratio of 3-methyl-1,5-pentanediol to adipic acid was changed to 3-methyl-1,5-pentanediol / adipic acid = 1.60 / 1, and that the number average molecular weight was adjusted as shown in Table 1 by adjusting the reaction time after adding 150 μL of tetraisopropyl titanate, reducing the pressure to 2,000 Pa, performing the reaction for 3 hours, and then further reducing the pressure to 80 Pa.

[Production Example 3]

A polyester polyol (A-3) was obtained in the same manner as in Production Example 1 except that the molar ratio of 3-methyl-1,5-pentanediol to adipic acid was changed to 3-methyl-1,5-pentanediol / adipic acid = 1.26 / 1, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 4]

A polyester polyol (A-4) was obtained in the same manner as in Production Example 1 except that the molar ratio of 3-methyl-1,5-pentanediol to adipic acid was changed to 3-methyl-1,5-pentanediol / adipic acid = 1.06 / 1, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 5]

A polyester polyol (A-5) was obtained in the same manner as in Production Example 1 except that the molar ratio of 3-methyl-1,5-pentanediol to adipic acid was changed to 3-methyl-1,5-pentanediol / adipic acid = 1.04 / 1, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 6]

A polyester polyol (A-6) was obtained in the same manner as in Production Example 1, except that sebacic acid was used instead of adipic acid, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 7]

A polyester polyol (A-7) was obtained in the same manner as in Production Example 1 except that terephthalic acid was used instead of adipic acid, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 8]

A polyester polyol (A-8) was obtained in the same manner as in Production Example 1 except that isophthalic acid was used instead of adipic acid, and that the number average molecular weight was adjusted as shown in Table 1 by adding 150 μL of tetraisopropyl titanate, reducing the pressure to 2,000 Pa, performing the reaction for 3 hours, and then adjusting the reaction times after the pressure was further reduced to 80 Pa.

[Production Example 9]

A polyester polyol (A-9) was obtained in the same manner as in Production Example 1 except that 2-methyl-1,3-propanediol was used instead of 3-methyl-1,5-pentanediol, and that the number average molecular weight was adjusted as shown in Table 1 by adding 150 μL of tetraisopropyl titanate, reducing the pressure to 2,000 Pa, performing the reaction for 3 hours, and then adjusting the reaction time after the pressure was further reduced to 80 Pa.

[Production Example 10]

A polyester polyol (A-10) was obtained in the same manner as in Production Example 4 except that 2-methyl-1,3-propanediol was used instead of 3-methyl-1,5-pentanediol, and that the number average molecular weight was adjusted as shown in Table 1 by adding 150 $\mu$L of tetraisopropyl titanate, reducing the pressure to 2,000 Pa, performing the reaction for 3 hours, and then adjusting the reaction time after the pressure was further reduced to 80 Pa.

[Production Example 11]

A polyester polyol (A-11) was obtained in the same manner as in Production Example 1, except that succinic acid was used instead of adipic acid and that the number average molecular weight was adjusted as shown in Table 1 by adding 150 $\mu$L of tetraisopropyl titanate, reducing the pressure to 2,000 Pa, performing the reaction for 3 hours, and then adjusting the reaction time after the pressure was further reduced to 80 Pa.

[Comparative Production Example 1]

A polyester polyol (A'-1) was obtained in the same manner as in Production Example 1 except that 1,4-butanediol was used instead of 3-methyl-1,5-pentanediol, and that the number average molecular weight was adjusted as shown in Table 1 by adding 150 $\mu$L of tetraisopropyl titanate, reducing the pressure to 2,000 Pa, performing the reaction for 3 hours, and then adjusting the reaction time after the pressure was further reduced to 80 Pa.

(Cyclic Ester Compound (C))

[Production Example 12]

Into a flask equipped with an equipment capable of distilling off a generated liquid and a vacuum pump, 3-methyl-1,5-pentanediol and adipic acid were charged at a molar ratio of 3-methyl-1,5-pentanediol / adipic acid = 1.12 / 1, and it was heated under a nitrogen atmosphere at normal pressure at 160°C for 3 hours and then at 220°C for 3 hours to perform a reaction while distilling off water. Next, 150 $\mu$L of tetraisopropyl titanate was added, the pressure was reduced to 2,000 Pa, the reaction was performed for 3 hours, the pressure was further reduced to 80 Pa, and the reaction was performed while appropriately checking until the number average molecular weight reached 3,000, thereby obtaining a polyester polyol (A-1).

Next, the distillation residue, toluene, and water were charged into a separating funnel at a mass ratio of distillation residue / toluene / water = 1 / 10 / 10, and 4-methyl-1,7-dioxacyclotridecane-8,13-dione contained in the distillation residue was extracted into toluene. The toluene layer was added to an eggplant flask and air-dried at 20°C overnight to volatilize toluene, and then dried in a vacuum dryer under conditions of 20°C and 100 Pa for 1 hour to obtain a crystal of 4-methyl-1,7-dioxacyclotridecane-8,13,-dione (cyclic ester compound (C-1)) as a cyclic ester compound.

[Table 1]

Table 1

| | Kind | Polyester Polyol Constituent Component | | | Number Average Molecular Weight |
| | | Polyhydric Alcohol | Polycarboxylic Acid | Ratio (Molar Ratio)[*4] | |
|---|---|---|---|---|---|
| Production Example 1 | Polyester Polyol (A-1) | MPD[*1] | Adipic Acid | 53 / 47 | 3,000 |
| Production Example 2 | Polyester Polyol (A-2) | MPD[*1] | Adipic Acid | 62/38 | 1,000 |
| Production Example 3 | Polyester Polyol (A-3) | MPD[*1] | Adipic Acid | 56 / 44 | 1,700 |

(continued)

| | Kind | Polyester Polyol Constituent Component | | | Number Average Molecular Weight |
| --- | --- | --- | --- | --- | --- |
| | | Polyhydric Alcohol | Polycarboxylic Acid | Ratio (Molar Ratio)[*4] | |
| Production Example 4 | Polyester Polyol (A-4) | MPD[*1] | Adipic Acid | 51 / 49 | 5,000 |
| Production Example 5 | Polyester Polyol (A-5) | MPD[*1] | Adipic Acid | 51 / 49 | 8,000 |
| Production Example 6 | Polyester Polyol (A-6) | MPD[*1] | Sebacic Acid | 53 / 47 | 2,900 |
| Production Example 7 | Polyester Polyol (A-7) | MPD[*1] | Terephthalic Acid | 53 / 47 | 2,800 |
| Production Example 8 | Polyester Polyol (A-8) | MPD[*1] | Isophthalic Acid | 53 / 47 | 2,900 |
| Production Example 9 | Polyester Polyol (A-9) | MPO[*3] | Adipic Acid | 53 / 47 | 3,000 |
| Production Example 10 | Polyester Polyol (A-10) | MPO[*3] | Adipic Acid | 51 / 49 | 4,900 |
| Production Example 11 | Polyester Polyol (A-11) | MPD[*1] | Succinic Acid | 53 / 47 | 3,000 |
| Comparative Production Example 1 | Polyester Polyol (A'-1) | 1,4-BD[*2] | Adipic Acid | 53 / 47 | 3,100 |
| *1: It represents 3-methyl-1,5-pentanediol.<br>*2: It represents 1,4-butanediol.<br>*3: It represents 2-methyl-1,3-propanediol.<br>*4: It represents Polyhydric Alcohol/Polycarboxylic Acid. | | | | | |

[Examples 1 to 17]

Each of the polyester polyols (A-1) to (A-8) obtained in Production Examples, the polylactic acid-based polymer (B-1), and the cyclic ester compound (C) were charged into a twin-screw kneader ("ULTnano50" manufactured by Technovel Corporation) according to respective formulations shown in Table 2, and extruded into a strand shape at a cylinder temperature of 200°C, a screw rotation speed of 50 rpm, and a residence time of 1 minute, and the obtained strand was cut into pellets to obtain a resin composition. Each of the obtained resin composition was evaluated as mentioned above. The results are shown in Table 2.

[Examples 18 to 30]

Each of the polyester polyols (A-1) to (A-11) obtained in Production Examples and the polylactic acid-based polymers (B-1) to (B-2) were charged into a twin-screw kneader ("ULTnano50" manufactured by Technovel Corporation) according to respective formulations shown in Table 2, and extruded into a strand shape at a cylinder temperature of 200°C, a screw rotation speed of 50 rpm, and a residence time of 1 minute and the obtained strand was cut into pellets to obtain a resin composition. The obtained resin composition was evaluated as mentioned above. The results are shown in Tables 2 and 3.

[Comparative Example 1]

A resin composition was obtained in the same manner as in Example 1 except that the polyester polyol (A-1) was not used. The obtained resin composition was evaluated as mentioned above. The results are shown in Table 2.

[Comparative Example 2]

A resin composition was obtained in the same manner as in Example 1 except that the polyester polyol (A'-1) was used instead of the polyester polyol (A-1). The obtained resin composition was evaluated as mentioned above. The results are shown in Table 2.

[Comparative Examples 3 to 6]

Resin compositions were obtained in the same manner as in Example 1 except that the plasticizer 1 was used instead of the polyester polyol (A-1) according to respective formulations shown in Table 2. The obtained resin compositions were evaluated as mentioned above. The results are shown in Table 2.

[Comparative Example 7]

A resin composition was obtained in the same manner as in Example 21 except that the polyester polyol (A-1) was not used. The obtained resin composition was evaluated as mentioned above. The results are shown in Table 3.

[Comparative Examples 8 to 12]

Resin compositions were obtained in the same manner as in Example 21 except that the polyester polyol (A'-1) or the plasticizer 1 was used instead of the polyester polyol (A-1) according to respective formulations shown in Table 3. The obtained resin compositions were evaluated as mentioned above. The results are shown in Table 3.

[Table 2]

Table 2

| | | Formulation | | | | | | | |
|---|---|---|---|---|---|---|---|---|---|
| | | Polyester Polyol (A) | | Polylactic Acid-Based Polymer (B) | | Cyclic Ester Compound (C) | | Other Additives | |
| | | Kind | Blending Amount (Parts by Mass) | Kind | Blending Amount (Parts by Mass) | Kind | Blending Amount (Parts by Mass) | Kind | Blending Amount (Parts by Mass) |
| | Example 1 | (A-1) | 1 | (B-1) | 100 | - | - | - | - |
| | Example 2 | (A-1) | 4 | (B-1) | 100 | - | - | - | - |
| | Example 3 | (A-1) | 10 | (B-1) | 100 | - | - | - | - |
| | Example 4 | (A-1) | 20 | (B-1) | 100 | - | - | - | - |
| | Example 5 | (A-2) | 10 | (B-1) | 100 | - | - | - | - |
| | Example 6 | (A-3) | 10 | (B-1) | 100 | - | - | - | - |
| | Example 7 | (A-4) | 10 | (B-1) | 100 | - | - | - | - |
| | Example 8 | (A-5) | 10 | (B-1) | 100 | - | - | - | - |
| | Example 9 | (A-6) | 10 | (B-1) | 100 | - | - | - | - |
| | Example 10 | (A-7) | 10 | (B-1) | 100 | - | - | - | - |
| | Example 11 | (A-8) | 10 | (B-1) | 100 | - | - | - | - |
| | Example 12 | (A-1) | 10 | (B-1) | 100 | (C-1) | 0.01 | - | - |
| | Example 13 | (A-1) | 10 | (B-1) | 100 | (C-1) | 0.02 | - | - |
| | Example 14 | (A-1) | 10 | (B-1) | 100 | (C-1) | 0.03 | - | - |
| | Example 15 | (A-1) | 10 | (B-1) | 100 | (C-1) | 0.1 | - | - |

(continued)

| | Formulation | | | | | | | |
|---|---|---|---|---|---|---|---|---|
| | Polyester Polyol (A) | | Polylactic Acid-Based Polymer (B) | | Cyclic Ester Compound (C) | | Other Additives | |
| | Kind | Blending Amount (Parts by Mass) | Kind | Blending Amount (Parts by Mass) | Kind | Blending Amount (Parts by Mass) | Kind | Blending Amount (Parts by Mass) |
| Example 16 | (A-1) | 10 | (B-1) | 100 | (C-1) | 1.0 | - | - |
| Example 17 | (A-1) | 10 | (B-1) | 100 | (C-1) | 2.5 | - | - |
| Example 18 | (A-9) | 10 | (B-1) | 100 | - | - | - | - |
| Example 19 | (A-10) | 10 | (B-1) | 100 | - | - | - | - |
| Example 20 | (A-11) | 10 | (B-1) | 100 | - | - | - | - |
| Comparative Example 1 | - | - | (B-1) | 100 | - | - | - | - |
| Comparative Example 2 | - | - | (B-1) | 100 | - | - | (A'-1) | 10 |
| Comparative Example 3 | - | - | (B-1) | 100 | - | - | Plasticizer 1 | 1 |
| Comparative Example 4 | - | - | (B-1) | 100 | - | - | Plasticizer 1 | 4 |
| Comparative Example 5 | - | - | (B-1) | 100 | - | - | Plasticizer 1 | 10 |
| Comparative Example 6 | - | - | (B-1) | 100 | - | - | Plasticizer 1 | 20 |

| | Measurement and Evaluation | | | | | | |
|---|---|---|---|---|---|---|---|
| | Resin Composition Tg (°C) | Impact Resistance | Tensile Physical Properties (Tensile Test) | | | Bleed-out | Biodegradability |
| | | Impact Strength (J) | Tensile Modulus of Elasticity (MPa) | Maximum Strength (MPa) | Tensile Elongation (%) | | |
| Example 1 | 59.1 | 0.8 | 3,700 | 63 | 8 | VG | A |
| Example 2 | 56.2 | 0.8 | 3,600 | 57 | 9 | VG | A |
| Example 3 | 53.1 | 0.9 | 2,800 | 50 | 320 | VG | A |
| Example 4 | 50.9 | 0.9 | 2,500 | 50 | 51 | G | A |
| Example 5 | 49.2 | 0.7 | 3,000 | 53 | 8 | VG | A |
| Example 6 | 52.1 | 0.8 | 3,000 | 53 | 130 | VG | A |
| Example 7 | 57.1 | 1.3 | 2,700 | 42 | 520 | VG | A |
| Example 8 | 57.0 | 1.4 | 2,800 | 51 | 310 | VG | A |
| Example 9 | 52.3 | 1.3 | 3,000 | 50 | 460 | VG | A |
| Example 10 | 58.8 | 0.8 | 3,000 | 51 | 250 | VG | A |
| Example 11 | 58.3 | 0.9 | 3,000 | 52 | 270 | VG | A |
| Example 12 | 53.6 | 0.9 | 2,800 | 50 | 315 | VG | A |
| Example 13 | 54.0 | 0.9 | 2,800 | 50 | 320 | VG | A |

# EP 4 722 297 A1

(continued)

| | Measurement and Evaluation | | | | | | |
|---|---|---|---|---|---|---|---|
| | Resin Composition Tg (°C) | Impact Resistance | Tensile Physical Properties (Tensile Test) | | | Bleed-out | Biodegradability |
| | | Impact Strength (J) | Tensile Modulus of Elasticity (MPa) | Maximum Strength (MPa) | Tensile Elongation (%) | | |
| Example 14 | 54.2 | 0.9 | 2,800 | 50 | 320 | VG | A |
| Example 15 | 53.7 | 0.9 | 2,800 | 50 | 320 | VG | A |
| Example 16 | 54.8 | 0.9 | 2,800 | 50 | 320 | VG | A |
| Example 17 | 50.9 | 0.9 | 2,800 | 50 | 320 | VG | A |
| Example 18 | 50.9 | 0.8 | 5,500 | 51 | 14 | VG | A |
| Example 19 | 55.0 | 2.1 | 4,200 | 48 | 40 | VG | A |
| Example 20 | 49.0 | 0.7 | 3,500 | 52 | 6 | VG | A |
| Comparative Example 1 | 59.2 | 1.0 | 4,000 | 63 | 4 | VG | A |
| Comparative Example 2 | 51.4 | 0.8 | 3,900 | 60 | 6 | VG | A |
| Comparative Example 3 | 58.3 | 1.0 | 4,200 | 60 | 3 | VG | A |
| Comparative Example 4 | 51.2 | 0.7 | 4,000 | 56 | 4 | VG | A |
| Comparative Example 5 | 38.8 | 1.0 | 1,700 | 31 | 30 | VG | A |
| Comparative Example 6 | 23.5 | 1.1 | 380 | 4 | 230 | NG | A |

[Table 3]

Table 3

| | Formulation | | | | | |
|---|---|---|---|---|---|---|
| | Polyester Polyol (A) | | Polylactic Acid-Based Polymer (B) | | Other Additives | |
| | Kind | Blending Amount (Parts by Mass) | Kind | Blending Amount (Parts by Mass) | Kind | Blending Amount (Parts by Mass) |
| Example 21 | (A-1) | 1 | (B-2) | 100 | - | - |
| Example 22 | (A-1) | 4 | (B-2) | 100 | - | - |
| Example 23 | (A-1) | 10 | (B-2) | 100 | - | - |
| Example 24 | (A-1) | 20 | (B-2) | 100 | - | - |
| Example 25 | (A-3) | 4 | (B-2) | 100 | - | - |
| Example 26 | (A-3) | 10 | (B-2) | 100 | - | - |

(continued)

| | Formulation | | | | | |
|---|---|---|---|---|---|---|
| | Polyester Polyol (A) | | Polylactic Acid-Based Polymer (B) | | Other Additives | |
| | Kind | Blending Amount (Parts by Mass) | Kind | Blending Amount (Parts by Mass) | Kind | Blending Amount (Parts by Mass) |
| Example 27 | (A-3) | 20 | (B-2) | 100 | - | - |
| Example 28 | (A-4) | 4 | (B-2) | 100 | - | - |
| Example 29 | (A-4) | 10 | (B-2) | 100 | - | - |
| Example 30 | (A-4) | 20 | (B-2) | 100 | - | - |
| Comparative Example 7 | - | - | (B-2) | 100 | - | - |
| Comparative Example 8 | - | - | (B-2) | 100 | (A'-1) | 10 |
| Comparative Example 9 | - | - | (B-2) | 100 | Plasticizer 1 | 1 |
| Comparative Example 10 | - | - | (B-2) | 100 | Plasticizer 1 | 4 |
| Comparative Example 11 | - | - | (B-2) | 100 | Plasticizer 1 | 10 |
| Comparative Example 12 | - | - | (B-2) | 100 | Plasticizer 1 | 20 |

Table 3 (continued)

| | Measurement and Evaluation | | | | |
|---|---|---|---|---|---|
| | Resin Composition Tg (°C) | Impact Resistance | Tensile Physical Properties (Tensile Test) | | |
| | | Charpy Impact Strength (kJ/m$^2$) | Tensile Modulus of Elasticity (MPa) | Maximum Strength (MPa) | Tensile Elongation (%) |
| Example 21 | 58.8 | 3 | 3,100 | 66 | 3 |
| Example 22 | 56.4 | 8 | 3,100 | 60 | 9 |
| Example 23 | 52.9 | 15 | 2,800 | 48 | 22 |
| Example 24 | 52.0 | 18 | 2,600 | 47 | 29 |
| Example 25 | 55.2 | 5 | 3,000 | 59 | 8 |
| Example 26 | 51.8 | 6 | 2,700 | 45 | 21 |
| Example 27 | 49.4 | 7 | 2,400 | 42 | 30 |
| Example 28 | 58.2 | 10 | 3,000 | 51 | 10 |
| Example 29 | 57.3 | 18 | 2,800 | 46 | 23 |
| Example 30 | 56.0 | 20 | 2,700 | 46 | 24 |
| Comparative Example 7 | 60.2 | 3 | 3,200 | 67 | 2 |
| Comparative Example 8 | 50.2 | 4 | 3,000 | 60 | 5 |
| Comparative Example 9 | 60.3 | 4 | 3,300 | 61 | 3 |
| Comparative Example 10 | 52.1 | 5 | 2,800 | 57 | 20 |
| Comparative Example 11 | 45.6 | 10 | 1,400 | 45 | 31 |
| Comparative Example 12 | 24.8 | 14 | 800 | 30 | 59 |

Table 3 (continued)

| | Measurement and Evaluation | | | | |
|---|---|---|---|---|---|
| | Bending Physical Properties (Bending Test) | | | Bleed-out | Biodegradability |
| | Bending Modulus of Elasticity (MPa) | Bending Strength (MPa) | Bending Strain (%) | | |
| Example 21 | 3,800 | 82 | 2 | VG | A |
| Example 22 | 3,600 | 76 | 3 | VG | A |
| Example 23 | 3,100 | 62 | 15 | VG | A |
| Example 24 | 3,000 | 62 | 16 | G | A |
| Example 25 | 3,600 | 75 | 4 | VG | A |
| Example 26 | 3,300 | 69 | 7 | VG | A |
| Example 27 | 2,800 | 59 | 16 | VG | A |
| Example 28 | 3,700 | 77 | 8 | VG | A |
| Example 29 | 3,200 | 63 | 17 | VG | A |
| Example 30 | 3,100 | 62 | 19 | G | A |
| Comparative Example 7 | 3,800 | 83 | 2 | VG | A |
| Comparative Example 8 | 3,300 | 77 | 3 | G | A |
| Comparative Example 9 | 3,700 | 80 | 3 | VG | A |
| Comparative Example 10 | 3,100 | 68 | 12 | VG | A |
| Comparative Example 11 | 1,600 | 38 | 15 | G | A |
| Comparative Example 12 | 900 | 20 | 18 | NG | A |

From the comparison among Examples 1 to 30 and Comparative Examples 1 to 12, it is found that the resin compositions obtained in Examples are resin compositions in which a decrease in the glass transition temperature is suppressed and which have good elongation and impact resistance. In addition, it can be found that the polyester polyols (A-1) to (A-11) obtained in Production Examples 1 to 11 are useful as a modifier for the polylactic acid-based polymer (B).

## Claims

1. A resin composition comprising a polyester polyol (A) and a polylactic acid-based polymer (B),

   wherein the polyester polyol (A) contains a unit derived from a polyhydric alcohol (a1) and a polycarboxylic acid (a2), and
   the polyhydric alcohol (a1) contains an aliphatic diol (a1-1) having an alkyl group as a branched chain and having 4 or more carbon atoms.

2. The resin composition according to Claim 1, wherein the polycarboxylic acid (a2) is an aliphatic dicarboxylic acid (a2-1).

3. The resin composition according to Claim 2, wherein the aliphatic dicarboxylic acid (a2-1) is at least one selected from adipic acid and sebacic acid.

4. The resin composition according to any one of Claims 1 to 3, wherein the polyester polyol (A) has a number average molecular weight of 500 to 100,000.

5. The resin composition according to any one of Claims 1 to 4, wherein 0.1 to 50 parts by mass of the polyester polyol (A) is contained with respect to 100 parts by mass of the polylactic acid-based polymer (B).

6. The resin composition according to Claim 3, wherein the aliphatic dicarboxylic acid (a2-1) contains adipic acid and the polyester polyol (A) has a number average molecular weight of 2,000 to 100,000.

7. The resin composition according to Claim 3, wherein the aliphatic dicarboxylic acid (a2-1) contains sebacic acid and the polyester polyol (A) has a number average molecular weight of 2,000 to 100,000.

8. The resin composition according to any one of Claims 1 to 7, wherein 0.001 to 3.0 parts by mass of a cyclic ester compound (C) is contained with respect to 100 parts by mass of the polylactic acid-based polymer (B).

## INTERNATIONAL SEARCH REPORT

| International application No. |
|---|
| **PCT/JP2024/019966** |

**A. CLASSIFICATION OF SUBJECT MATTER**

***C08L 67/04***(2006.01)i; ***C08G 63/16***(2006.01)i; ***C08K 5/15***(2006.01)i; ***C08L 67/02***(2006.01)i
FI:  C08L67/04; C08G63/16; C08K5/15; C08L67/02

According to International Patent Classification (IPC) or to both national classification and IPC

**B. FIELDS SEARCHED**

Minimum documentation searched (classification system followed by classification symbols)

  C08L67/04; C08G63/16; C08K5/15; C08L67/02

Documentation searched other than minimum documentation to the extent that such documents are included in the fields searched

  Published examined utility model applications of Japan 1922-1996
  Published unexamined utility model applications of Japan 1971-2024
  Registered utility model specifications of Japan 1996-2024
  Published registered utility model applications of Japan 1994-2024

Electronic data base consulted during the international search (name of data base and, where practicable, search terms used)

  CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2002-326662 A (DAINIPPON INK & CHEMICALS INC.) 12 November 2002 (2002-11-12)<br>  claims, paragraphs [0069]-[0070], [0086]-[0087], [0113]-[0117], [0132], production example 2, example 5 | 1-8 |
| X | WO 2023/026758 A1 (DIC CORPORATION) 02 March 2023 (2023-03-02)<br>  claims, paragraphs [0024], [0056]-[0058], example 1 | 1-5, 7 |
| A | | 6, 8 |
| A | JP 2011-153275 A (MITSUBISHI CHEMICAL CORPORATION) 11 August 2011 (2011-08-11)<br>  entire text | 1-8 |
| A | JP 2013-160914 A (RICOH COMPANY, LTD.) 19 August 2013 (2013-08-19)<br>  entire text | 1-8 |

✓ Further documents are listed in the continuation of Box C.    ✓ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/019966**

### C. DOCUMENTS CONSIDERED TO BE RELEVANT

| Category* | Citation of document, with indication, where appropriate, of the relevant passages | Relevant to claim No. |
|---|---|---|
| P, A | JP 2024-26999 A (MITSUBISHI CHEMICAL CORPORATION) 29 February 2024 (2024-02-29)<br>entire text | 1-8 |
| P, A | JP 2024-27000 A (MITSUBISHI CHEMICAL CORPORATION) 29 February 2024 (2024-02-29)<br>entire text | 1-8 |
| P, A | WO 2023/243649 A1 (KURARAY CO., LTD.) 21 December 2023 (2023-12-21)<br>entire text | 1-8 |

Form PCT/ISA/210 (second sheet) (July 2022)

## INTERNATIONAL SEARCH REPORT
### Information on patent family members

International application No.

**PCT/JP2024/019966**

| Patent document cited in search report | | | Publication date (day/month/year) | Patent family member(s) | | | Publication date (day/month/year) |
|---|---|---|---|---|---|---|---|
| JP | 2002-326662 | A | 12 November 2002 | US | 5403897 | A | |
| | | | | claims, columns 14-17, examples 28, 34 | | | |
| | | | | EP | 618250 | A1 | |
| WO | 2023/026758 | A1 | 02 March 2023 | CN | 117545791 | A | |
| | | | | TW | 202309203 | A | |
| JP | 2011-153275 | A | 11 August 2011 | (Family: none) | | | |
| JP | 2013-160914 | A | 19 August 2013 | US | 2013/0202996 | A1 | |
| | | | | claims, examples | | | |
| JP | 2024-26999 | A | 29 February 2024 | (Family: none) | | | |
| JP | 2024-27000 | A | 29 February 2024 | (Family: none) | | | |
| WO | 2023/243649 | A1 | 21 December 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008019419 A
- JP 2005023091 A